# EUROPEAN PATENT APPLICATION

(11) **EP 1 947 847 A1**
(43) Date of publication of application: **23.07.2008**
(21) Application number: 06810760.6
(22) Date of filing: 28.09.2006
(51) Int. Cl.: H04N 5/91, H04N 5/44

(54) **RECORDED DATA REPRODUCTION DEVICE AND PROGRAM**

(30) Priority: 13.10.2005 JP 2005298664
(71) Applicant: Pioneer Corporation, Tokyo 153-8654 (JP)
(72) Inventor: NAKAMURA, Harumi, Tokorozawa-shi Saitama 359-8522 (JP); HASHIMOTO, Shinya, Tokorozawa-shi Saitama 359-8522 (JP)
(74) Representative: Haley, Stephen
(86) International application number: PCT/JP2006/319313
(87) International publication number: WO 2007/043348

(57) **Abstract**

The present invention is directed to provide a recorded data playback device and a program that can provide appropriate summarized data according to the a user's preference for the content.

The recorded data playback device includes storage means 40 that stores at least one piece of recorded data in which a content formed by at least video information is correlated with a content identifier for identifying what is in the content, summarized data generation means 32 that generates summarized data of each piece of the recorded data based on the content, summarized data playback means 52 that plays back the generated summarized data, preference decision means 34 that decides a user's preference for each content based on access history of each content, and summarized data modification means 33 that modifies a summarized form of the summarized data of the recorded data including the content according to the decided user's preference.

## Description

### Technical Field

The present invention relates to a recorded data playback device and a program that play back recorded data in which a content at least including video information is recorded.

### Background Art

In recent years, a method of deciding user preference for a content that at least includes video information distributed through broadcasting or a network based on viewing history of the content has been developed (for example, Patent Document 1). A number of content receiving/recording devices that can search and display a content with a high level of user's preference by using the decided users preference from a number of contents to be viewed, and automatically record the contents with a high level of user's preference have been introduced.

Also, a recorded data playback device that generates summarized data (digest) in which recorded data is summarized and can play back to show this has been disclosed (for example, Patent Document 2). The summarized data instead of the full content is viewed to search or view desired recorded data, thereby reducing the time for viewing the recorded data.
[Patent Document 1] JP-A-2003-023589
[Patent Document 2] JP-A-2001-155470

### Disclosure of the Invention

### Subject to be Solved by the Invention

In the case of a content with a high level of preference, it is highly likely that the user watches the full content of the recorded data. In other words, it is unlikely that the summarized data is viewed instead of the full content of the recorded data. On the other hand, in the case of a content with a low level of preference, it is highly likely that the summarized data is viewed instead of the full content of the recorded data. In this manner, it is imaginable that the summarized data in which the recorded data of the content is summarized is used in various ways, according to the a user's preference for contents. However, with related-art recorded data playback devices, it is impossible to provide summarized data according to a user's preference for contents.

In view of the above problems, it is an object of the present invention to provide a recorded data playback device and a program that can provide appropriate summarized data according to a user's preference for contents.

### Means for Solving the Subject

A recorded data playback device according to the present invention includes storage means that stores at least one piece of recorded data in which a content formed by at least video information is correlated with a content identifier for identifying what is in the content, summarized data generation means that generates summarized data of each piece of the recorded data based on the content, summarized data playback means that plays back generated summarized data, preference decision means that decides a user's preference for each content based on access history of each content, and summarized data modification means that modifies a summarized form of the summarized data of the recorded data including the content according to the decided user's preference.

With this configuration, a user's preference for each content of the recorded data is decided, and a summarized form of the summarized data of the recorded data including the content is modified according to the decided user's preference. As a result, appropriate summarized data according to the preference of the user for the content can be provided for the user. In other words, the user will be given easy access to the summarized data of the content in various ways according to his/her own preference for each content. The "user's preference for contents" indicates a viewer's (user's) "degree of preference" for the content being quantified.

In this case, it is preferable to further include list generation means that generates an identifier list that shows a list of content identifiers in an order of the decided user's preference and display control means that displays the identifier list.

With this configuration, the content identifiers for displaying the identifier list in an order of the decided user's preference can be arranged in descending order or ascending order of a user's viewing tendency. Therefore, for example, by displaying the content identifiers in descending order of user's preference, the user can easily search the recorded data which is more preferable for him/her from the recorded data being stored.

In this case, it is preferable that the summarized data modification means control the summarized data playback means, and modify a playback time of the summarized data.

With this configuration, the playback time of the summarized data is modified, as a modification of the summarized form according to the preference of the user. Accordingly, for example, control will be possible, for example, to set the playback time of the summarized data of a content with a high level of preference, in other words, a content that the user is likely to view the full content of the recorded data short, or to set the playback time of the summarized data of a content with a low level of preference, in other words, a content that the user is unlikely to view the full content of the recorded data long, so that the user can grasp the content simply by viewing the summarized data. As a result, appropriate control according to the usage form of the summarized data can be realized. Also, in this case, because only the playback time of the summarized data is modified, there is no need to generate the summarized data again, thereby enabling a good processing efficiency.

In this case, it is preferable that the summarized data generation means generate information related to an extraction starting position of at least one partial scene extracted from a content and to an extraction time from each extraction starting position as the summarized data. It is also preferable that the summarized data modification means control the summarized data generation means and modify the sum total of the extraction time.

With this configuration, the sum total of the extraction time of the partial scene extracted as the summarized data is modified, in other words, the length of the summarized data is modified, as a modification of the summarized form. Accordingly, for example, control will be possible to shorten the length of the summarized data of a content with a high level of preference, in other words, a content that the user is likely to view the full content of the recorded data, or to extend the length of the summarized data of a content with a low level of preference, in other words, a content that the user is unlikely to view the full content of the recorded data, so that the user can grasp the content simply by viewing the summarized data. As a result, appropriate control according to the usage form of the summarized data can be realized.

In this case, it is preferable that the summarized data generation means generate information related to an extraction starting position of at least one partial scene extracted from the content and to an extraction time from each extraction starting position as the summarized data. It is also preferable that the summarized data modification means control the summarized data generation means and modify the extraction starting position of the partial scene.

With this configuration, the extraction starting position of at least one partial scene extracted as the summarized data from the recording data is modified as a modification of the summarized form according to a user's preference. Accordingly, for example, as for the summarized data of a content with a high level of preference, all the extraction starting positions can be set in the first half of the recorded data, so that the conclusion (last half) of the recorded data will not be included in the summarized data, in order to increase viewing motivations of the user. On the other hand, as for the summarized data of a content with a low level of preference, the extraction starting positions can be set to cover the entire recorded data equally, so that the outline of the recorded data can be grasped by viewing the summarized data. As a result, various summarized data according to a user's preference can be generated. As for the summarized data of a content with a low level of preference, the summarized data may be generated by extracting highlight scenes of the recorded data in order to arouse the user's interest in the content.

In this case, it is preferable that the content identifier include information related to a recording time . It is also preferable that the display control means display the content identifier of which the recording time falls into a time frame corresponding to a time of displaying the identifier list at the top of the identifier list.

With this configuration, the content identifier of the recorded data that is recorded in the same time frame as the time frame in which the user intends to view the recorded data is displayed at the top of the identifier list. Therefore, when the user wants to view the recorded data of the content in the same time frame as the recording time frame of the content, the corresponding recorded data can be searched easily.

In this case, it is preferable that the preference decision means update the user's preference of the content in the recorded data based on a playback time of the recorded data.

With this configuration, the user's preference of the content in the recorded data is updated based on the playback time of the recorded data. Therefore, for example, when the user's preference is set high in proportion to the playback time, the more the user plays back the content, the higher the level of preference becomes. As a result, the viewing tendency of the user for the content can accurately be reflected on the user's preference. In this case, it is preferable that the user's preference be decided not for the content of each piece of the recorded data, but for a group of a plurality of contents of which, for example, the recording history falls into the same day of the week, the same time frame, and the same channel.

In this case, it is preferable that the preference decision means update the user's preference of the content in the recorded data based on an elapsed time being unplayed back from the start of recording of the recorded data.

With this configuration, the user's preference for the content in the recorded data is updated based on the elapsed time being unplayed back from the start of recording of the recorded data. Therefore, when the user's preference is set low in proportion to the elapsed time being unplayed back, the longer the time the user leaves the recorded content unplayed back, the lower the level of preference becomes. As a result, the viewing tendency of the user for the content can accurately be reflected on the user's preference.

In this case, it is preferable to further include user information input means that is used for inputting user information to identify a user who carries out viewing and recording, while the viewing and the recording are executed. It is also preferable that the preference decision means decide the user's preference for each user based on an access history of each user being input, the storage means store the recorded data for each user, and the list generation means generate the identifier list for each user.

With this configuration, a user who carries out the viewing and the recording is identified, the preference is decided for each user, and the identifier list is generated for each user. Therefore, for example, even when the recorded data playback device is shared by a plurality of people, such as family members, the viewing tendency of each user can accurately be reflected on the user's preference. Because the identifier list is generated for each user, the user can view the identifier list that displays only the content identifiers of the recorded data that the user himself/herself has recorded.

A program according to the present invention realizes functions of each means in the recorded data playback device.

By using the program, a recorded data playback device that can provide appropriate summarized data according to a user's preference for contents can be realized.

### Brief Description of the Drawings

Fig. 1 is a block configuration diagram of a recorded data playback device according to an embodiment of the present invention.
Fig. 2 is a diagram showing an example of access history.
Figs. 3A to 3C are explanatory diagrams for explaining examples of a method for deciding a user's preference.
Fig. 4 is a flowchart showing a flow of calculating playback points.
Fig. 5 is an example of data stored in a preference storage unit.
Figs. 6A to 6C are explanatory diagrams for explaining an example of modifying a summarized form.
Figs. 7A to 7C are explanatory diagrams for explaining another example of modifying the summarized form.
Figs. 8A and 8B are diagrams showing an example of a list/playback screen that displays a playback video of summarized data and an identifier list on a single screen.
Fig. 9 is a control flowchart for executing recording and playback with a recorded data playback device according to a second embodiment.
Figs. 10A and 10B are diagrams showing examples of a display screen displayed when user information is input and when an identifier list is displayed.

### Reference Numerals

- 10: recorded data playback device
- 30: control section
- 32: summarized data generation unit
- 33: summarized data modification unit
- 34: preference decision unit
- 35: list generation unit
- 40: storage section
- 41: recorded data storage unit
- 50: playback/displaying section
- 52: summarized data playback unit
- 53: display control unit
- 110: identifier list
- 120: playback video
- CI: content identifiers
- D1: list/playback screen
- Ac: access history
- B: extraction starting position
- P: user's preference
- T: extraction time

### Best Mode for Carrying Out the Invention

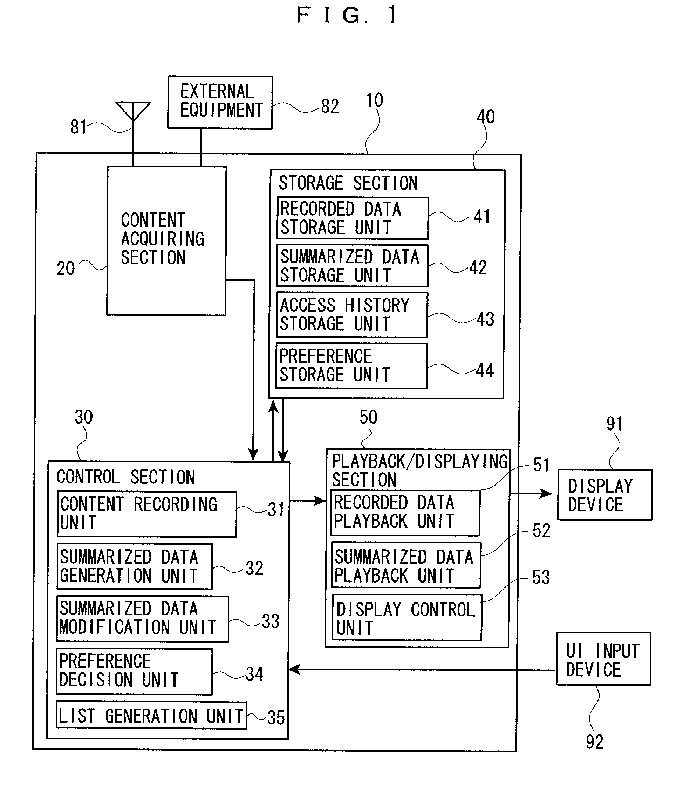

Exemplary embodiments of a recorded data playback device and a program according to the present invention will be described in detail below with reference to the accompanying drawings. Fig. 1 is a block configuration diagram of a recorded data playback device 10 according to an embodiment of the present invention. As shown in the diagram, the recorded data playback device 10 includes a content acquiring section 20 for acquiring a content containing at least video information from outside, a control section 30 for carrying out various controls, a storage section 40 for storing recorded data in which the content is recorded, and a playback/displaying section 50 for playing back recorded data and summarized data, and for carrying out the control to display a playback video of the recorded data and the summarized data on a display device 91.

A main component of the content acquiring section 20 is a tuner to receive a television broadcast, such as terrestrial broadcast, BS, or CS, through a receiving antenna 81. To acquire a content from external equipment 82 (such as a television set, a personal computer, and various tuners that include an external output terminal), an external input terminal is the main component of the content acquiring section 20. Although not shown, the content acquiring section 20 can also acquire video information distributed via a communication network such as the Internet. When various semiconductor memories or optical disk readers are installed as the content acquiring section 20, the content recorded therein can also be acquired. The content acquiring section 20 can also acquire detailed information related to a content, such as a program title and a program category of the content, along with the content from an acquisition source (for example, a television broadcasting station) of the content.

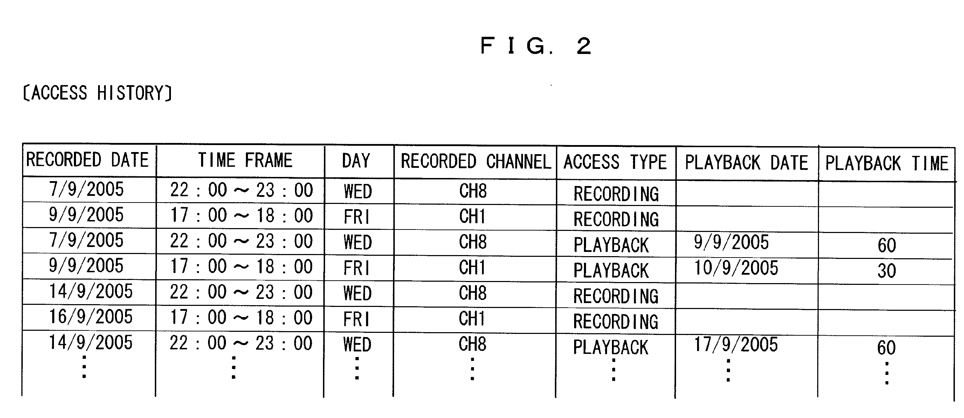

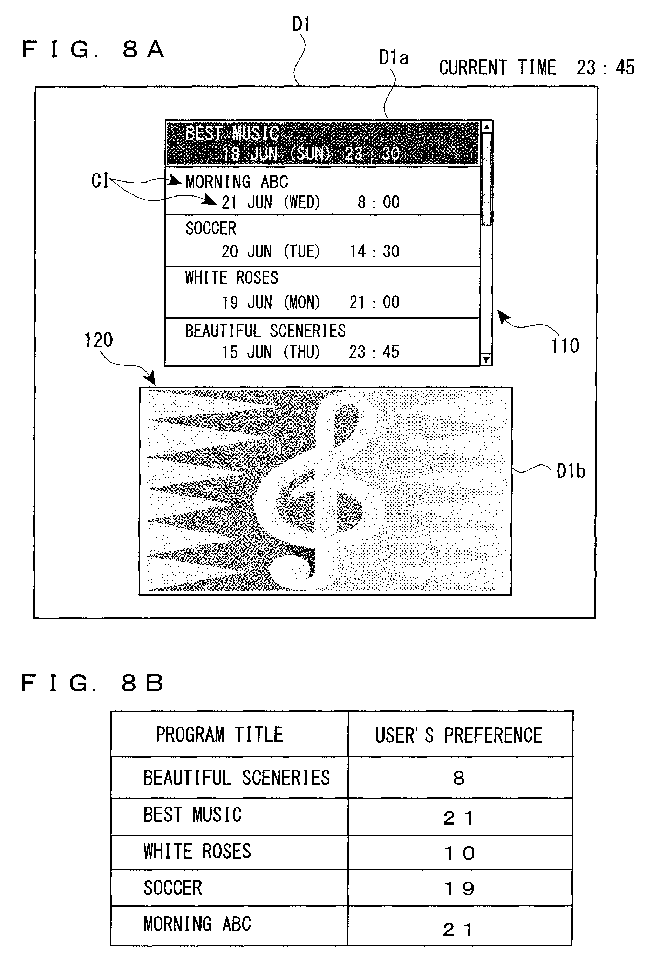

The control section 30 carries out various controls by controlling each means of the recorded data playback device 10. More specifically, the control section 30 includes a content recording unit 31 for recording an acquired content, a summarized data generation unit 32 for generating summarized data based on the recorded content, a summarized data modification unit 33 for modifying the control of the summarized data generation unit 32 and a summarized data playback unit 52, a preference decision unit 34 for deciding a user's preference P for each of the recorded content based on access history Ac (see Fig. 2) stored in an access history storage unit 43, and a list generation unit 35 for generating an identifier list 110 (see Fig. 8A) that shows a list of content identifiers CI (which will be described later; see Fig. 8A) for identifying the content.

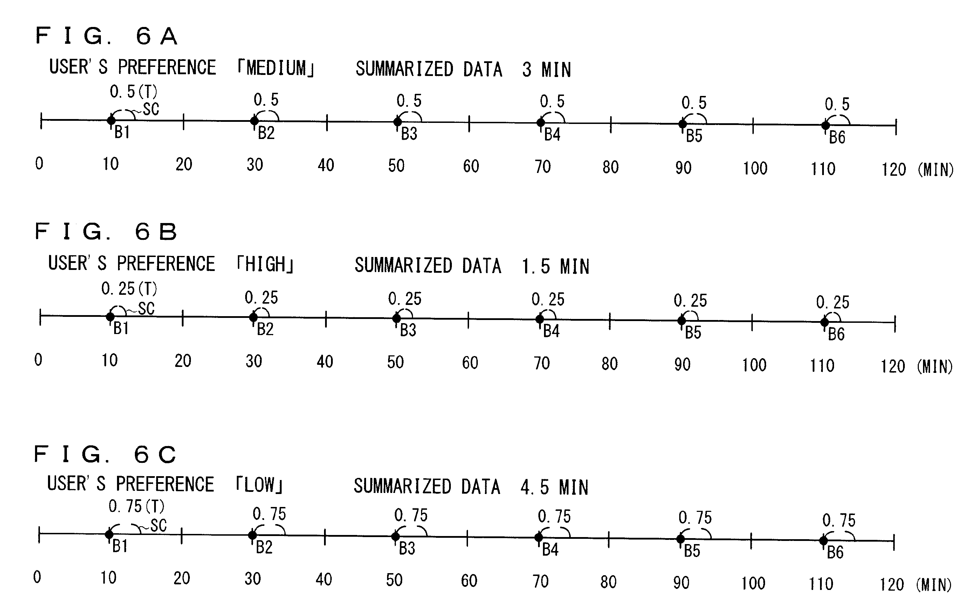

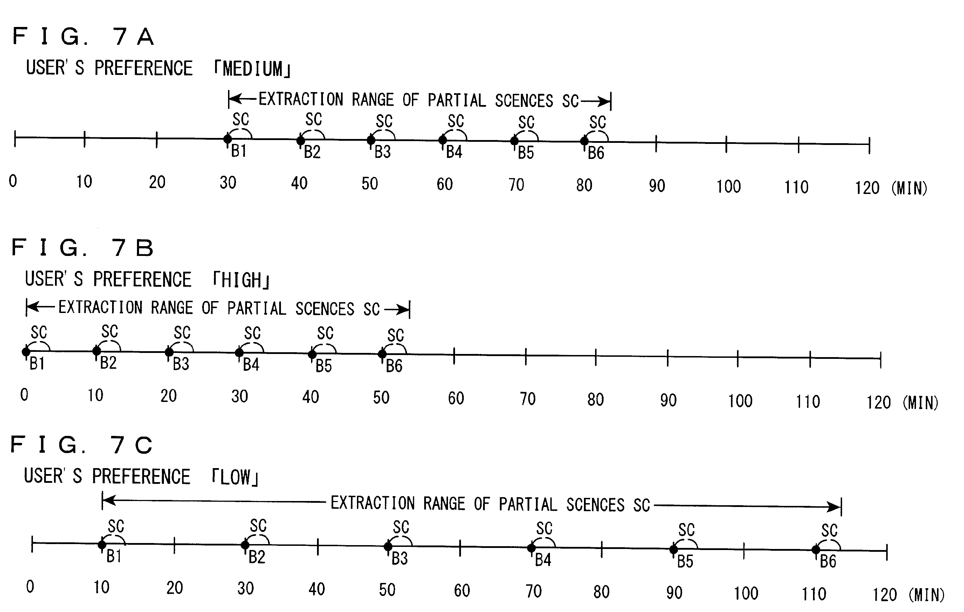

The summarized data generated by the summarized data generation unit 32 is data related to an extraction starting position B of at least one partial scene extracted as the summarized data, and to extraction time T from each of the extraction starting position (see Figs. 6A to 6C and 7A to 7C). The control section 30, for example, receives a signal transmitted from a UI input device 92 such as a remote controller, and can carry out various controls accordingly.

The storage section 40 includes a recorded data storage unit 41 for storing the recorded data recorded by the content recording unit 31, a summarized data storage unit 42 for storing the summarized data generated by the summarized data generation unit 32, an access history storage unit 43 for storing the access history Ac including recording history and viewing history of each content being acquired, and a preference storage unit 44 for storing the user's preference P decided by the preference decision unit 34. The recorded data storage unit 41 correlates the recorded content with the content identifier CI (for example, a recording start date and time, and a recording channel; when the content acquiring section 20 acquires detailed information such as a program title, this will be included) for identifying this, and stores them therein as the recorded data. Information related to the corresponding recorded data (for example, content identifiers CI) is added to the summarized data. The storage section 40 can be formed by a hard disk, various semiconductor memories, various optical disks, and the like, and the type is not limited.

The playback/displaying section 50 includes a recorded data playback unit 51 for playing back recorded data, a summarized data playback unit 52 for playing back the summarized data, and a display control unit 53 for carrying out the control to display an identifier list generated by the list generation unit 35 and a playback video of the summarized data or the recorded data on the display device 91.

For example, when recording of a content has completed with the content recording unit 31, the recorded content is correlated with the content identifier CI for identifying the content, and stored in the recorded data storage unit 41 as the recorded data. The summarized data is generated in the summarized data generation unit 32, and stored in the summarized data storage unit 42. The generation of summarized data and the execution of recording may be carried out at the same time. At this time, as the access history Ac, history data to the effect that the recording has been carried out for a content will be generated. The access history Ac will now be explained with reference to Fig. 2.

As shown in the diagram, whenever a user executes recording and playback for a content, history data is generated as the history of the content. The access history Ac includes data items such as a "recorded date", a "recorded time frame", a "recorded day of the week", a "recorded channel", an "access type", a "playback date", and a "playback time". When the recording of the content has completed, the control section 30 acquires information related to the "recorded date", the "recorded time frame", the "recorded day of the week", and the "recorded channel" from the content recording unit 31, generates one piece of history data by setting the "access type" to "recording", and stores the history data as the access history Ac. When the playback of the recorded data has finished, the control section 30 acquires information related to the "playback time" of the played-back recorded data from the recorded data playback unit 51, generates one piece of history data by setting the "access type" to "playback" and the "playback date" to the current date, and stores the history data as the access history Ac.

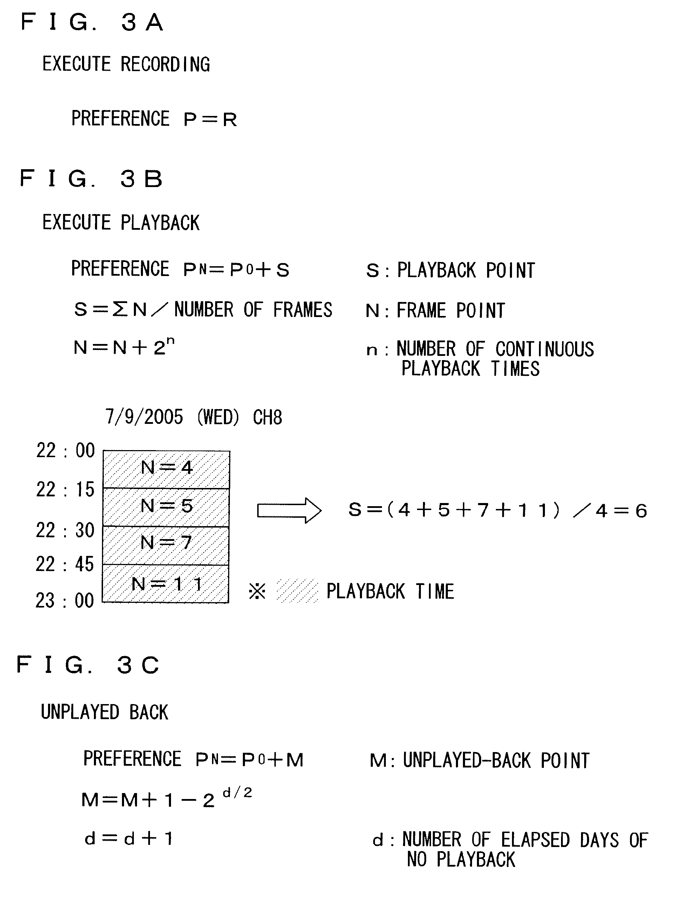

An example of a process of deciding a user's preference P based on the access history Ac will now be explained. As shown in Fig. 3A, when recording of a content is executed, the preference decision unit 34 assigns a recording point R (any value) for the content and decides the assigned value as the user's preference P for the content. The recording point R may be weighted by a program category, broadcasting day of the week, broadcasting frame (time frame), and the like of the content.

As shown in Fig. 3B, when playback of a content is executed, a playback point S for the content will be calculated. Then, a value added with the calculated playback point S and the current user's preference Po for the content will be updated as the latest user's preference Pn.

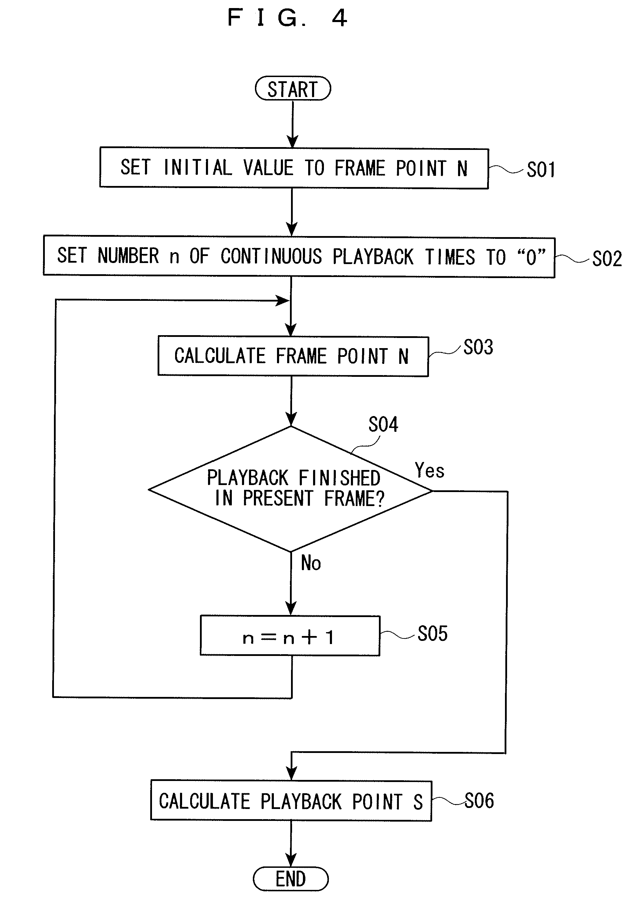

A method of calculating the playback point S by the preference decision unit 34 will now be explained. The playback point S is calculated by dividing the recorded content, for example, into 15-minute units, using this as one frame, calculating a frame point N for each of the frame, and dividing the sum total of the calculated frame point N by the number of frames (when a content is 60 minutes, the number of frames will be 4) (see Fig. 3B). The frame point N, as shown in the diagram, is calculated using a the number n of continuous playback times as an exponent. An example of calculating the playback point S when recorded data of a content of which the recorded date and time is "2005/6/7", the recorded day of the week is "WED", the recorded time frame is "22:00 through 23:00" and the recorded channel is "CH8" is played back for 60 minutes will be explained in detail below with reference to Fig. 3B and the flowchart in Fig. 4. In the following example, the recorded data is played back for the first time.

As shown in the flowchart in Fig. 4, any value is set as an initial value for the frame point N (in the present embodiment, temporarily set to "3"; S01). Because the recorded data is played back for the first time, the number n of continuous playback times is set to "0" (S02). Then, a frame point N of the first frame (0 to 15 minutes) will be calculated (S03). In this case, the frame point N is 3+2°=4 (see Fig. 3B). Whether the playback has finished in this frame (0 to 15 minutes) will then be determined (S04). As shown in Fig. 3B, the playback time of this recorded data is 60 minutes. Accordingly, the playback is not finished in this frame (S04: No), and the number n of continuous playback-times will be counted up (n=1; S05).

Then, a frame point N of the next frame (15 to 30 minutes) will be calculated (S03). In this case, the frame point N is 3+2¹=5 (see Fig. 3B). Whether the playback has finished in this frame (15 to 30 minutes) will then be determined (S04). As the above, the playback is not finished in this frame (S04: No), and the number n of -continuous playback times will be counted up (n=2; S05). Then, a frame point N of the next frame (30 to 45 minutes) will be calculated (S03). In this case, the frame point N is 3+2²=7 (see Fig. 3B). Whether the playback has finished in this frame (15 to 30 minutes) will then be determined (S04). As the above, because the playback is not finished in this frame (S04: No), the number n of continuous playback times will be counted up (n=3; S05).

Then, a frame point N of the next frame (45 to 60 minutes) will be calculated (S03). In this case, the frame point N is 3+2³=11 (see Fig. 3B). Whether the playback has finished in this frame (45 to 60 minutes) will then be determined (S04). Because the playback finishes in this frame (S04: Yes), the playback point S is calculated based on a formula shown in Fig. 3B (S06). More specifically, as shown in Fig. 3B, the playback point S is 6. Although decimals are rounded off here, the decimals may be rounded up.

The values of the frame point N and the number n of continuous playback times will both be stored in the preference storage unit 44 with the value of the user's preference P. In other words, when the recorded data is played back for the second time or more, the value of the stored frame point N is set, in place of setting the initial value for the frame point N (which corresponds to S01). Similarly, the value of the stored number of continuous playback times is set, in place of "0" set for the number of continuous playback times (which corresponds to S02). In other words, in proportion to the playback time of the recorded data, the value of the user's preference P for the content of the recorded data will increase.

As shown in Fig. 3C, when recording of a content is executed and the recorded data remains unplayed back, the preference decision unit 34 calculates an unplayed-back point M for the content, and a value added with the calculated unplayed-back point M and the current user's preference Po for the content is updated as the latest user's preference Pn for the content. The unplayed-back point M is calculated based on a formula shown in Fig. 3C, and the initial value may be any value.

A constant number d included in an exponent (d/2) of the formula for calculating the unplayed-back point M is the number d of elapsed days of no playback from the execution of the recording. As shown in Fig. 3C, when this process of deciding preference is executed once a day, the value of the number d of elapsed days is counted up by one from the previous value. The values of the unplayed-back point M and the number d of elapsed days are stored in the preference storage unit 44 with the value of the user's preference P. In other words, in proportion to the number of elapsed days that the recorded data remaining unplayed back, the value of the user's preference P for the content of the recorded data will decrease.

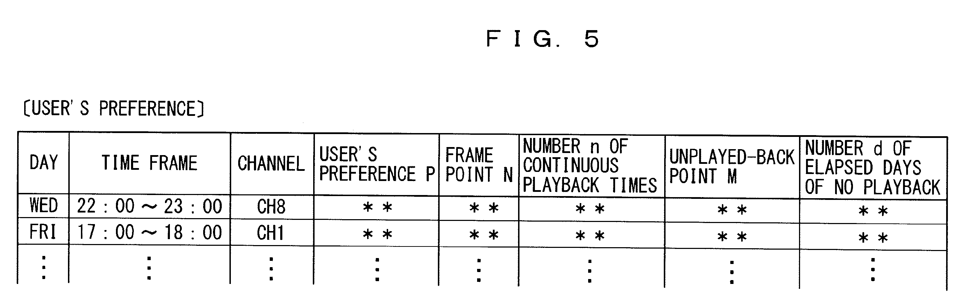

In the recorded data playback device 10 according to the present embodiment, the user's preference P is decided not for each content of each piece of recorded data, but for a plurality of contents of which the recording history falls into the same day of the week, the same time frame, and the same channel, in other words, for each group of the contents of the same program. Therefore, when the user's preference P is decided based on the access history Ac shown in Fig. 2, the user's preference P, as shown in Fig. 5, is decided and stored for each content having the recorded day of the week of "WED", the recorded time frame of "22:00 through 23:00", and the recorded channel of "CH8", and the content having the recorded day of the week of "FRI", the recorded time frame of "17:00 through 18:00", and the recorded channel of "CH1".

In the access history Ac shown in Fig. 2, for example, when the history data with the recorded date of "2005/9/14", the recorded time frame of "22:00 through 23:00", the day of the week of "WED", the recorded channel of "CH8", and the access type of "recording" is generated, the preference decision unit 34 adds a recording point R to the stored user's preference P for the content having the recorded day of the week of "WED", the recorded time frame of "22:00 through 23:00", and the recorded channel of "CH8", and updates the user's preference P.

As shown in the diagram, in addition to the user's preference P, the frame point N, the number of continuous playback times, the unplayed-back point M, and the value of the number d of elapsed days are also stored for each group of the contents of the same program. In the above explanation, the user's preference P is decided by considering a plurality of contents of which the recording history falls into the same day of the week, the same time frame, and the same channel are grouped into the same program. However, when a program ID or a program title that is used to identify the same program is acquired with the content acquiring section 20, the user's preference P may be decided accordingly. In addition, the user's preference P may be decided by the category and the cast of each of the contents. Information related to the category can be acquired as necessary from an electric program guide (EPG).

While in the above, the process of deciding the user's preference P is executed, for example, once a day, the decision process may be executed using a predetermined operation, such as turning the power of the recorded data on or off, as a trigger. Further, the update of the user's preference P with the calculation of the recording point R and the playback point N may be executed using the processes of recording and playback as a trigger.

The recorded data playback device 10 according to the present embodiment modifies a summarized form of the summarized data in which the recorded data including the content is summarized, according to the user's preference P decided for each content. How to control this will now be explained.

The summarized data modification unit 33 mainly executes the control to modify the summarized form. As the above, the summarized data is data related to the extraction starting position B of at least one partial scene extracted from the content, and to the extraction time T from each of the extraction starting position B. The summarized data modification unit 33 carries out the control to make the summarized data generation unit 32 modify the sum total of the extraction time T or the extraction starting position B, according to the user's preference P for the content of which the summarized data is to be generated. A process of modifying the sum total of the extraction time T will be explained first with reference to Figs. 6A to 6C. In the following, an example of ranking the user's preference P into three levels of "medium", "high", and "low" will be explained.

Fig. 6A shows an example of the summarized data of a content of which the user's preference P is ranked as "medium". As shown in the diagram, in a 120-minute content, extraction starting positions B of partial scenes SC are set at minutes (B1), 30 minutes (B2), 50 minutes (B3), 70 minutes (B4), 90 minutes (B5), and 110 minutes (B6). The extraction time T from each of the extraction starting positions B is set to 0.5 minutes. In other words, the sum total of the extraction time is 3 minutes, and the playback time of the summarized data will be 3 minutes.

Fig. 6B shows an example of the summarized data of a content of which the user's preference P is ranked as "high".
As shown in the diagram, in a 120-minute content, extraction starting positions B of partial scenes SC are the same as the example shown in Fig. 6A. However, the extraction time T from each of the extraction starting positions B is set to 0.25 minutes. Accordingly, the sum total of the extraction time T is 1.5 minutes, and the playback time of the summarized data will be 1.5 minutes.

Fig. 6C shows an example of the summarized data of a content of which the user's preference P is ranked as "low". As shown in the diagram, in a 120-minute content, extraction starting positions B of partial scenes SC are the same as the examples shown in Figs. 6A and 6B. However, the extraction time T from each of the extraction starting positions B is set to 0.75 minutes. Accordingly, the sum total of the extraction time T is 4.5 minutes, and the playback time of the summarized data will be 4.5 minutes.

In the above examples, the extraction time T from each extraction starting position (B1 through B6) is made in equal. However, the extraction time T does not have to be equal. For example, in the example shown in Fig. 6B, the extraction time from the extraction starting positions B1 through B3 may be 0.3 minutes, and the extraction time from the extraction starting positions B4 through B6 may be 0.2 minutes. Similarly, in the example shown in Fig. 6C, the extraction time from the extraction starting positions B1 through B3 may be 0.5 minutes, and the extraction time from the extraction starting positions B4 through B6 may be 1 minute.

The reason why the length of the summarized data is shortened when the user's preference P is high is that the user is likely to view the full content of the recorded data of a content with a high level of user's preference P. Accordingly, the importance of the summarized data is relatively low. On the other hand, the reason why the length of the summarized data is extended when the user's preference P is low is that the user is unlikely to view the full content of the recorded data of a content with a low level of the user's preference P, and there is a good chance that the user views the summarized data instead of the full content. Accordingly, the importance of the summarized data becomes relatively high. In other words, by carrying out the above control, appropriate control according to the usage form of the summarized data can be realized.

Next, a process of modifying extraction starting positions B will be explained with reference to Figs. 7A to 7C. Fig. 7A shows an example of the summarized data of a content of which the user's preference P is ranked as "medium". As shown in the diagram, in a 120-minute content, extraction starting positions B of partial scenes SC are set at 30 minutes (B1), 40 minutes (B2), 50 minutes (B3), 60 minutes (B4), 70 minutes (B5), and 80 minutes (B6). The extraction time T from each of the extraction starting positions B is set to 0.5 minutes. Accordingly, the extraction range of the partial scenes SC played back as the summarized data is in the middle part (30 to 80.5 minutes) of the content.

Fig. 7B shows an example of the summarized data of a content of which the user's preference P is ranked as "high". As shown in the diagram, in a 120-minute content, extraction starting positions B of partial scenes SC are set at 0 minutes (B1), 10 minutes (B2), 20 minutes (B3), 30 minutes (B4), 40 minutes (B5), and 50 minutes (B6). Accordingly, the extraction range of the partial scenes SC played back as the summarized data is in the first half of the content (0 through 50.5 minutes). Therefore, there is no risk of including the last half of the content (especially the conclusion) in the summarized data with a high level of the user's preference P, in other words, the user is likely to watch the full content of the recorded data.

Fig. 7C shows an example of the summarized data of a content of which the user's preference P is ranked as "low". As shown in the diagram, in a 120-minute content, extraction starting positions B of partial scenes SC are set at 10 minutes (B1), 30 minutes (B2), 50 minutes (B3), 70 minutes (B4), 90 minutes (B5), and 110 minutes (B6). Accordingly, the extraction range of the partial scenes SC played back as the summarized data covers almost the entire content (10 to 110.5 minutes). Therefore, the summarized data can provide easy grasp of the outline of the entire content as regards the content with a low level of the user's preference P, in other words, when the user is unlikely to watch the full content of the recorded data.

With the summarized data of a content of which the user's preference P is ranked as "low", the extraction range of the partial scenes SC played back as the summarized data may be limited to the last half (60 to 120 minutes) of the content. Accordingly, by making it sure that the conclusion is included in the summarized data, especially with contents in such categories as drama, movie, and cartoon that have a plot, the user's viewing motivation can be expected to increase. Both the sum total of the extraction time T and the extraction starting positions B may also be modified according to the user's preference P.

The modification of the playback time of the summarized data may be realized, also simply by modifying the playback time, instead of by modifying the sum total of the extraction time T. In this case, the summarized data generation unit 32 generates the summarized data in advance with the sum total of the extraction time T as the maximum. The summarized data modification unit 33 then decides the playback time, by referring to the user's preference P for the content of the summarized data to be played back, in synchronism with an execution of playing back the summarized data. Then, the summarized data modification unit 33 causes the summarized data playback unit 52 to carry out the playback up to the decided playback time.

In this manner, appropriate summarized data according to the preference of the user for each content can be provided for the user, by modifying extraction starting positions B of partial scenes extracted as the summarized data or modifying the playback time of the summarized data according to the user's preference P for each content. In other words, the user will be given easy access to the summarized data of the content in various ways according to his/her own preference for each content. While in the above example, the summarized form is modified by ranking the user's preference P into three levels, more threshold values may be set.

Next, a display screen displayed on the display device 91 by the control of the display control unit 53 will be described specifically with reference to Figs. 8A and 8B. Fig. 8A shows an example of a list/playback screen D1 for displaying an identifier list 110 and a playback video 120 of the summarized data on a single screen. The list/playback screen D1 is displayed, for example, triggered by turning on the power of the recorded data playback device 10 or a predetermined operation by the user using the UI input device 92. As shown in the diagram, the list/playback screen D1 includes a list display D1a for displaying the identifier list 110 and a playback video display D1b for displaying a playback video of the summarized data.

On the list display D1a, each content identifier CI of each piece of recorded data stored in the recorded data storage unit 41 is listed and displayed as the identifier list 110. More specifically, when instructed to display the list/playback screen D1, the list generation unit 35 extracts the content identifier CI in the recorded data storage unit 41 and generates the identifier list 110. The display control unit 53 then executes the control to display the generated identifier list 110 on the list display D1b. The identifier list 110 is displayed on the list display D1b through these processes. According to an example of the present embodiment, a program title and a recording start date and time are stored as the content identifier CI, and the program title and the recording start date and time of each piece of recorded data are displayed on the identifier list 110.

The list generation unit 35 that generates the identifier list 110 arranges and displays the content identifiers CI in an order of the user's preference P being decided for each content. Fig. 8B shows the user's preference P decided for the content associated with each content identifier CI displayed on the identifier list 110. In an example of the identifier list 110 shown in the diagram, the content identifiers CI of the programs of "Best Music" and "Morning ABC" that have the highest user's preference P, to the content identifier CI of the program of "Beautiful Sceneries" that has the lowest user's preference P are displayed sequentially.

The list generation unit 35 generates a list so as content identifiers CI of which the recording time falls into the time frame corresponding to a time of displaying the identifier list 110 are displayed at the top of the identifier list 110. In other words, 24 hours are divided into a plurality of time frames, such as a late-evening frame of "23:00 through 03:59", a morning frame of "04:00 through 11:59", a day frame of "12:00 through 17:59", and a night frame of "18:00 through 22:59". Content identifiers CI of which the recording time falls into the time frame corresponding to a time of displaying the list are displayed at the top of the list.

The diagram shows, while displaying the list, it is 23:45. Therefore, between the programs of "Best Music" and "Morning ABC", which have the same level of the user's preference P, the content identifier CI of "Best Music" of which the recording time falls into the late-evening frame of "23:00 through 03:59" is displayed at the topmost of the identifier list 110, rather than "Morning ABC" of which the recording time falls into the morning frame of "04:00 through 11:59". The identifier list 110 may be generated under the arrangement condition that the coincidence of the time frames of the recording time and the list displaying time is given priority over the user's preference P. In this case, in the example of the diagram, the content identifier CI of "Beautiful Sceneries" is displayed at the position next to the content identifier CI of "Best Music". When the user's preference P is decided for each group of the same program, the latest recording date and time (or oldest recording date and time) may be given the highest priority for the arrangement order of the identifier list 110. By doing so, when a plurality of different programs are recorded, the content identifiers CI of the same program with the different recording dates and times will not be displayed consecutively.

The identifier list 110 displayed on the list/playback screen D1 is formed so that any one of the content identifiers CI can be selected, for example, by the user operating the UI input device 92. The selected content identifier CI is reversely displayed by the display control unit 53, for example, as shown in the diagram.

On the playback video display D1b, the playback video of the summarized data played back by the summarized data playback unit 52 will be displayed, by the control of the display control unit 53. The playback video 120 displayed on the playback video display D1b is a played back video of the summarized data in which the recorded data of the content identifier CI selected in the identifier list 110 is summarized. In other words, the summarized data playback unit 52 selects the recorded data including one selected content identifier CI from the recorded data storage unit 41, selects the summarized data of the selected recorded data from the summarized data storage unit 42, and plays back the summarized data.

The user's preference P for contents is unique to each individual. However, the recorded data playback device 10 is often shared by a plurality of people, such as family members. Therefore, it is difficult to accurately decide the user's preference P for each individual user. In a second embodiment, the recorded data playback device 10 that receives an input of user information at the execution of viewing and recording, and decides the user's preference P based on the input user information will be explained.

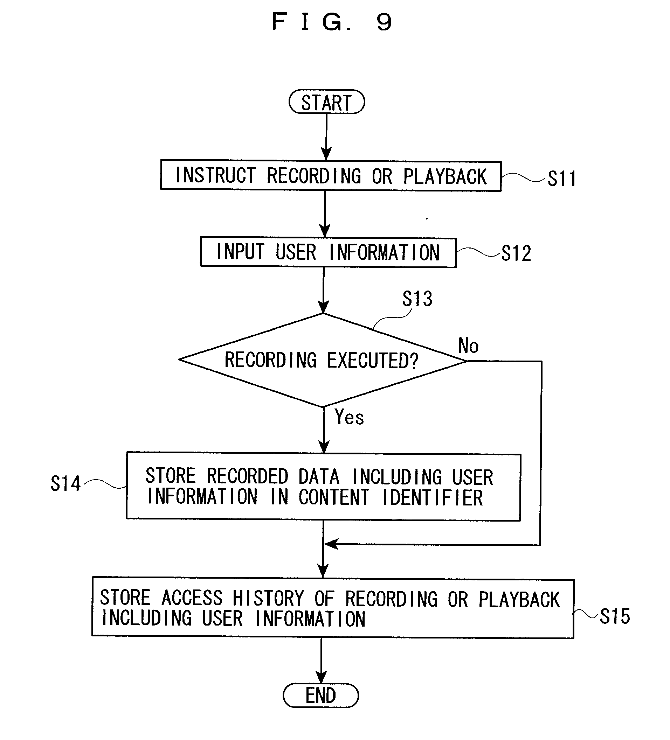

Fig. 9 is a control flowchart when recording of a content or playback of recorded data is executed with the recorded data playback device 10 according to the present embodiment. As shown in the diagram, when a user instructs recording of a content or playback of recorded data to the recorded data playback device 10 by means of the UI input device 92 (S11), the control section 30 executes a process of calling for the user to input user information. Accordingly, when the user inputs user information, for example, by using the UI input device 92, the user information will be input into the recorded data playback device 10 (S12).

Then, the recording of the content or the playback of the recorded data will be executed. When finished, if the recording of the content is executed (S13: Yes), the recorded data including the user information input into the content identifier CI will be stored in the recorded data storage unit 41 (S14). Also, the access history Ac including the input user information will be stored in the access history storage unit 43 (S15). The process of storing in the content identifier CI the user information (which corresponds to S14) may be omitted, and the user information corresponding to each piece of the stored recorded data may be acquired by referring to the recording history included in the access history Ac.

In this manner, the recorded data playback device 10 according to the second embodiment decides the user's preference P for each user based on the input user information. Accordingly, even when the device is shared by a plurality of users, the viewing tendency of each user can accurately be reflected on the user's preference P. Because the user information is included in the content identifier CI, the identifier list 110 can be generated for each of the users. As a result, the user can view the identifier list 110 in which only the content identifiers CI of the recorded data that the user himself/herself has recorded are extracted and displayed.

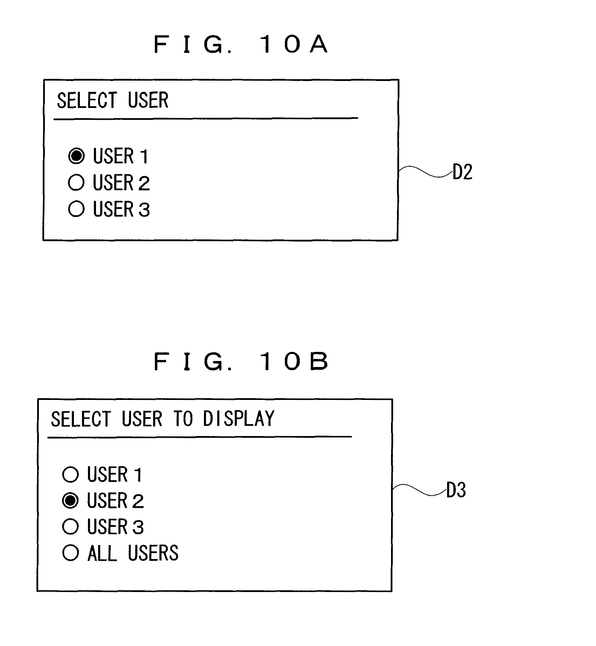

The "process of calling for the user to input user information" operated by the control section 30, for example, may be carried out through displaying a display screen D2 shown in Fig. 10A on the displaying device 91. The "user information" is information to identify users who carry out recording and playback. Accordingly, as shown in the diagram, a plurality of user candidates (user 1, user 2, and user 3) may be displayed on the display screen D2, thereby making the user select any one from them. Also, before displaying the list/playback screen D1 (see Fig. 8A) that shows the identifier list 110, the identifier list 110 of the selected user only may be displayed, for example, by displaying a display screen D3 shown in Fig. 10B.

As explained above, the recorded data playback device 10 of the present invention decides the user's preference P for each content of the recorded data and modifies the summarized form of the summarized data of the recorded data including the content according to the decided user's preference P. Accordingly, appropriate summarized data according to a user's preference for each content can be provided for the user. In other words, the user will be given easy access to the summarized data of the content in various ways according to his/her own preference for each content.

In addition to the recording history and the playback viewing history of contents, a real-time viewing history of the contents may also be stored as the access history Ac, and the user's preference P may be decided based on them. The viewing history that the user has watched a content in real time without recording the content is also stored as the access history. As a result, the accuracy of the user's preference P can further be improved.

Also, each section, unit, and function included in the recorded data playback device 10 according to in each of the embodiments can be provided as a program. The program can also be stored and provided in a recording medium (not shown). Examples of such recording medium include: a CD-ROM, a flash ROM, a memory card (a compact flash (trade mark), a smart media, a memory stick, and the like), a compact disk, a magneto-optical disk, a digital versatile disk, a flexible disk, and a hard disk.

The device configuration, the processing steps, and the like may not be limited to the above-described embodiments, but may be modified suitably within the spirit and scope of the present invention.

## Claims

1. A recorded data playback device comprising:
storage means that stores at least one piece of recorded data in which a content formed by at least video information is correlated with a content identifier for identifying what is in the content;
summarized data generation means that generates summarized data of each piece of the recorded data based on the content;
summarized data playback means that plays back the generated summarized data;
preference decision means that decides a user's preference for each content based on access history of each content; and
summarized data modification means that modifies a summarized form of the summarized data of the recorded data including the content according to the decided user's preference.

2. The recorded data playback device according to claim 1, further comprising:
list generation means that generates an identifier list that shows a list of the content identifier in an order of the decided user's preference; and
display control means that displays the identifier list.

3. The recorded data playback device according to claim 1, wherein the summarized data modification means controls the summarized data playback means and modifies a playback time of the summarized data.

4. The recorded data playback device according to claim 1, wherein
the summarized data generation means generates information related to an extraction starting position of at least one partial scene extracted from the content and to an extraction time from each of the extraction starting position as the summarized data, and
the summarized data modification means controls the summarized data generation means and modifies a sum total of the extraction time.

5. The recorded data playback device according to claim 1, wherein
the summarized data generation means generates information related to an extraction starting position of at least one partial scene extracted from the content and to an extraction time from each of the extraction starting position as the summarized data, and
the summarized data modification means controls the summarized data generation means and modifies the extraction starting position of the partial scene.

6. The recorded data playback device according to claim 2, wherein
the content identifier includes information related to a recording time, and
the display control means displays the content identifier of which the recording time falls into a time frame corresponding to a time of displaying the identifier list at top of the identifier list.

7. The recorded data playback device according to claim 1, wherein the preference decision means updates the user's preference of the content in the recorded data based on a playback time of the recorded data.

8. The recorded data playback device according to claim 1, wherein the preference decision means updates the user's preference of the content in the recorded data based on an elapsed time being unplayed back from start of recording of the recorded data.

9. The recorded data playback device according to claim 2, further comprising:
user information input means that is used for inputting user information to identify a user who carries out viewing and recording, while the viewing and the recording are executed; wherein
the preference decision means decides the user's preference for each user based on an access history of each user being input,
the storage means stores the recorded data for each user, and
the list generation means generates the identifier list for each user.

10. A program that enables a computer to function as each means in the recorded data playback device according to claim 1.
